# EUROPÄISCHE PATENTSCHRIFT

(11) **EP 4 225 568 B1**
(45) Veröffentlichungstag und Bekanntmachung des Hinweises auf die Patenterteilung: **11.12.2024**
(21) Anmeldenummer: 21799178.5
(22) Anmeldetag: 04.10.2021
(51) Int. Cl.: B29D 30/06

(54) **HEIZPRESSE UND VERFAHREN ZUR VULKANISATION EINES FAHRZEUGREIFENS IN DIESER HEIZPRESSE UNTER VAKUUM**
HEATING PRESS AND METHOD FOR VULCANIZING A VEHICLE TIRE IN SAID HEATING PRESS UNDER VACUUM
PRESSE À CHAUD ET PROCÉDÉ DE VULCANISATION SOUS VIDE D'UN PNEU DE VÉHICULE DANS LADITE PRESSE À CHAUD

(30) Priorität: 05.10.2020 DE 102020212551
(43) Veröffentlichungstag der Anmeldung: 16.08.2023
(73) Patentinhaber: Continental Reifen Deutschland GmbH, 30175 Hannover (DE)
(72) Erfinder: WENZEL, Karsten, 30165 Hannover (DE); WEDEKIND, Horst, 30165 Hannover (DE); RAMM, Michael, 30165 Hannover (DE)
(74) Vertreter: Continental Corporation
(86) Internationale Anmeldenummer: PCT/DE2021/200144
(87) Internationale Veröffentlichungsnummer: WO 2022/073569

(56) Entgegenhaltungen:
- DE-A1- 102018 216 754
- FR-A1- 2 980 135
- US-A- 5 145 688

## Beschreibung

Die Erfindung betrifft eine Heizpresse zum Vulkanisieren eines Fahrzeugreifens unter Vakuum
- mit einem Heizpressen-Oberteil und einem Heizpressen-Unterteil, wobei an dem Heizpressen-Oberteil ein kreisringförmiges Hauben-Oberteil mit einem die Formteile einer Vulkanisierform aufweisenden Container angeordnet sind und wobei das Heizpressen-Oberteil derart in axialer Richtung verfahrbar ist, dass das Hauben-Oberteil auf das Heizpressen-Unterteil zur Bildung eines geschlossenen Haubeninnenraumes fahrbar ist,
- wobei das Heizpressen-Oberteil, das Heizpressen-Unterteil und die Pressenplatte mit dem Container derart in Verbindung stehen, so dass beim Herunterfahren des Heizpressen-Oberteils und der Pressenplatte über einen in axialer Richtung erfolgenden Gesamthub, bei dem das offene Ende des Hauben-Oberteils auf das Heizpressen-Unterteil fährt, die Formteile der Vulkanisierform in radialer Richtung schließbar sind,
- wobei zumindest eine vakuumdichte Dichtung zumindest in der Stirnfläche eines Hauben-Teils angeordnet ist,
- wobei bei einem ersten Hub das Hauben-Oberteil derart verfahrbar ist, dass dieses auf dem Heizpressen-Unterteil aufsitzt und der Haubeninnenraum durch die Dichtung(en) vakuumdicht schließbar ist, während die Vulkanisierform jedoch noch luftdurchlässig geöffnet ist und
- wobei eine Pumpe und ein Vakuumtank angeordnet sind, mittels derer im Haubeninnenraum nach dem ersten Hub ein Vakuum erzeugbar ist, wobei der Vakuumtank und die Pumpe mit dem Haubeninnenraum in Verbindung stehen und wobei der Vakuumtank und die Pumpe miteinander in Verbindung stehen und
- wobei bei einem zweiten Hub die Pressenplatte derart verfahrbar ist, dass die Vulkanisierform unter Vakuumbedingungen im Haubeninnenraum vollständig schließbar ist.

Das Heizpressen-Oberteil und das Heizpressen-Unterteil stehen mit dem Container derart in Verbindung, so dass über einen in axialer Richtung erfolgenden Gesamthub, die Formteile der Vulkanisierform in radialer Richtung schließbar sind.

Die Erfindung betrifft ferner ein Verfahren zur Vulkanisation eines Rohreifens in dieser vorgenannten Heizpresse unter Vakuum mit folgenden nacheinander ablaufenden Schritten:
a) Beladen der geöffneten Heizpresse durch Einlegen des zu vulkanisierenden Rohreifens in den Container
b) Verfahren des Heizpressen-Oberteils um den ersten Hub in axialer Richtung in Richtung Heizpressen-Unterteil, bis die Stirnfläche des Hauben-Oberteils auf dem Heizpressen-Unterteil aufsetzt, um einen vakuumdicht geschlossenen Haubeninnenraum zu erhalten, während die Vulkanisierform nur zum Teil geschlossen ist
c) nur im Fall, dass die Ringdichtung ein in ihrem Durchmesser veränderbarer Schlauch ist: Aufpumpen der kreisringförmigen Schlauchdichtung, um den Haubeninnenraum vakuumdicht abzudichten
d) Öffnen der Verbindung zwischen Vakuumtank und Haubeninnenraum zur Erzeugung eines Teil-Vakuums in dem vakuumdicht geschlossenen Haubeninnenraum durch Druckausgleich zwischen Vakuumtank und Haubeninnenraum
e) bei Erhalt des Teil-Vakuums im Haubeninnenraum: Schließen der Verbindung zwischen Vakuumtank und Haubeninnenraum, Öffnen der Verbindung zwischen Haubeninnenraum und Pumpe und Abpumpen der restlich verbliebenden Luft aus dem Haubeninnenraum zur Erzeugung des Vakuums
f) Derartiges Verfahren des Containers, dass die Vulkanisierform vollständig geschlossen wird und anschließendes Schließen der Verbindung zwischen dem Haubeninnenraum und der Pumpe
g) Vulkanisation des Rohreifen und Öffnen der Verbindung zwischen Pumpe und Vakuumtank und Erzeugung eines Vakuums im Vakuumtank, wobei die Verbindung der Pumpe zu dem Haubeninnenraum und die Verbindung des Vakuumtanks zum Haubeninnenraum jeweils geschlossen sind
h) Öffnen der Heizpresse und Entladen des fertig vulkanisierten Reifens und zur Vulkanisierung jedes weiteren Reifens Wiederholung der Schritte a) - h).

Eine Heizpresse und ein Verfahren der jeweils eingangs genannten Art sind beispielsweise aus der DE 10 2018 216 754 A1 bekannt. Die Heizpresse weist eine Pressenplatte unterhalb des Containers auf, welche in axialer Richtung verfahrbar ist.

Die vorbeschriebene Heizpresse ist eine Standard-Heizpresse zum Vulkanisieren von Fahrzeugreifen unter atmosphärischen Bedingungen.

Die Heizpresse umfasst einen sogenannten Container, welcher die eigentliche segmentierte Vulkanisierform mit den dem Reifen formgebenden Formsegmenten und Seitenwandschalen sowie Wulstringen umfasst. Zudem sind Heizkammern zum Temperieren der formgebenden Teile angeordnet. Der Container ist während der Vulkanisation von einer geschlossenen Haube umgeben, welche im Stand der Technik primär zur Temperaturisolation während der Vulkanisation dient.

Um Fehlstellen an der Reifenoberfläche möglichst zu vermeiden, muss die Luft zwischen der Oberfläche des Rohreifens und der formgebenden Oberfläche der Formteile der Vulkanisierform entfernt werden. Hierzu ist es generell bekannt, dass 1000 bis 5000 Entlüftungsventile in den Formteilen vorzusehen sind. Durch diese Entlüftungsventile wird die Luft aus dem Formenhohlraum nach radial und axial außen durch Entlüftungskanäle abgeführt. Jedoch müssen die Formteile einer neuen Vulkanisierform mit diesen Ventilen bestückt werden. Weiterhin neigen diese Ventile durch eindringendes Gummi von dem zu vulkanisierenden Reifen zum Verdrecken, so dass diese aufwändig ausgetauscht oder gereinigt werden müssen.

Der Erfindung liegt die Aufgabe zugrunde, eine Heizpresse zum Vulkanisieren eines Fahrzeugreifens unter Vakuum bereitzustellen, mit welcher zuverlässig Fahrzeugreifen unter Vakuum und unter Verzicht auf Entlüftungsventile in der Vulkanisierform vulkanisiert werden kann. Es ist ebenfalls die Aufgabe der Erfindung, ein Verfahren zum zeiteffizienten Vulkanisieren eines Fahrzeugreifens unter Vakuum zur Verfügung zu stellen.

Die Aufgabe wird in Bezug auf die Heizpresse gelöst, indem im Hauben-Oberteil eine Pressenplatte oberhalb des Containers derart angeordnet ist, dass diese Pressenplatte und somit der Container in axialer Richtung verfahrbar ist.

Das Vakuum, welches nach dem ersten Hub innerhalb des geschlossenen Haubeninnenraumes erhaltbar ist, dient dazu, die Luft aus der noch nicht vollständig geschlossenen Vulkanisierform, insbesondere zwischen der äußeren Oberfläche des Reifens und den Formflächen der formenden Teile der Vulkanisierform zu entfernen. Nach dem zweiten, unter Vakuumbedingungen im Haubeninnenraum erfolgenden zweiten Hub durch die zusätzliche, im Haubeninnenraum zwischen oberer Seite des Containers und Hauben-Oberteil axial verlaufenden Pressenplatte, ist die Vulkanisierform vollständig schließbar. Die in der Stirnfläche des Haubenoberteils angeordnete Dichtung wird nur auf Druck beansprucht und ist somit zuverlässig und haltbar dichtend. Der zu vulkanisierenden Reifen ist hochqualitativ und ohne Fehlstellen zu fertigen.

Wesentlich ist weiterhin, dass die Vulkanisierform selber keine Entlüftungsmittel zur Entlüftung des Formenhohlraumes aufweist. Durch die Vulkanisation unter Vakuum wird auf die im Stand der Technik in der Vulkanisierform angeordneten 1000 bis 5000 Entlüftungsventile verzichtet, durch welche die Luft aus dem Formenhohlraum nach radial außen abgeleitet wird. Hierdurch ist eine Nachbearbeitung der durch die Entlüftungsmittel erhaltenen Gummiaustriebe am Reifen und ein Austausch bzw. die Reinigung nicht mehr funktionsfähiger Entlüftungsventile nicht mehr notwendig. Dieses ist zeit- und kostengünstig. Zudem erhält der vulkanisierte Reifen durch die Vulkanisation unter Vakuum eine äußere Form, welche absolut frei von Fehlstellen ist und dadurch perfekt anmutet. Es ist selbstverständlich, dass die Haube bzw. Heizpresse zum Erhalt eines vakuumdichten Haubeninnenraumes weitere Dichtungen aufweisen kann. An dem Container oder der Vulkanisierform selber sollen ausdrücklich keine Veränderungen hinsichtlich luftdichtender Maßnahmen vorgenommen sein.

Der Begriff Vakuum meint Luftdruck im Bereich von 950mbar (abs) bis 0, 1mbar (abs). Die Ringdichtung weist vorzugsweise einen runden, eckigen oder flachen Querschnitt auf.

Zweckmäßig ist es, wenn ein hydraulischer, pneumatischer oder elektrischer Aktuator angeordnet ist, durch den die Pressenplatte in axialer Richtung verfahrbar ist.

In einer bestimmten Ausführung der Erfindung ist an dem Heizpressen-Unterteil ein Hauben-Unterteil in Form eines Kreisringes angeordnet, wobei der Kreisring des Hauben-Oberteiles und der Kreisring des Hauben-Unterteiles den gleichen Innendurchmesser und den gleichen Außendurchmesser aufweisen und miteinander fluchtend in der Heizpresse angeordnet sind. Hierdurch ist eine sehr zuverlässige Dichtung des Haubeninnenraumes erhalten.

Zweckmäßig ist es, wenn die Dichtung eine Ringdichtungen ist.

Zweckmäßig ist es für eine zuverlässige Dichtleistung, wenn die Ringdichtung in einer kreisringförmigen Nut angeordnet ist, wobei der Durchmesser der Ringdichtungen geringfügig größer als die Tiefe der Nut ist. Geringfügig größer meint, dass die Dichtung beim Einbau in die Nut und im dichtenden Zustand maximal 40% komprimiert wird im Vergleich zur kompressionsfreien Geometrie der Dichtung. Durch die genaue Auslegung der Nut im Verhältnis zur Dichtungsgeometrie wird einer Beschädigung der Dichtung(en) zusätzlich vorgebeugt und die Haltbarkeit verbessert.

In einer Ausführung der Erfindung bestehen die Ringdichtung aus Vollmaterial. Das Vollmaterial kann aus einem oder mehreren für Dichtungen bekannten Materialien wie zum Beispiel FKM oder FFKM bestehen. Diese Dichtungen sind kostengünstig und einfach handzuhaben.

In einer anderen Ausführung der Erfindung ist die Ringdichtung ein in ihrem Durchmesser veränderbarer Schlauch. Dieses hat den Vorteil, dass die Ringdichtung geringer belastet wird und erst dann in seinem Durchmesser vergrößert wird, wenn die Dichtwirkung erforderlich ist.

Vorteilhaft ist es, wenn die Ringdichtungen differentiell gepumpte Doppelringdichtungen sind. Dieses hat den Vorteil, dass etwaige Leckagen mit geringen Pumpleistungen kompensiert werden können.

Zweckmäßig ist es, wenn der Vakuumtank ein Volumen aufweist, welches etwa 5 bis 10mal größer als das Volumen der geschlossenen Haube (inklusive Form, Container, Pressenplatte, Reifenrohling, Heizbalg) ist. Hierdurch ist sichergestellt, dass in der Haube zuverlässig ein Vakuum erzeugbar ist. Zudem ist die erforderliche Zeit für das Erzeugen des notwendigen Vakuums signifikant reduziert. Dieses kann im Rahmen des normalen Be- und Entladeprozeßes stattfinden.

In Bezug auf das Verfahren mit einer vorgenannten Heizpresse wird die Aufgabe dadurch gelöst, dass für Schritt f) die Pressenplatte im Heizpressen-Oberteil um den zweiten Hub verfahren wird.

Vorteilhaft ist es, wenn man zur Erleichterung von Schritt h) vorher ein weiteres in der Haube angeordnetes Ventil zum Brechen des Vakuums in der Haube öffnet und anschließend wieder schließt.

Ein Ausführungsbeispiel einer Heizpresse und das Verfahren zur Vakuum-Vulkanisation eines Fahrzeugluftreifens samt weiterer Vorteile sind anhand der nachfolgenden schematischen Figuren 1 bis 4 beschrieben. Es zeigen die:
- Fig. 1: eine erfindungsgemäße Heizpresse mit Container im geöffneten Zustand;
- Fig. 2: die Heizpresse der Fig. 1 in der Schließphase nach einem ersten Hub;
- Fig. 3: die Heizpresse der Fig. 1 und der Fig. 2 in geschlossenem Zustand nach einem zweiten Hub.

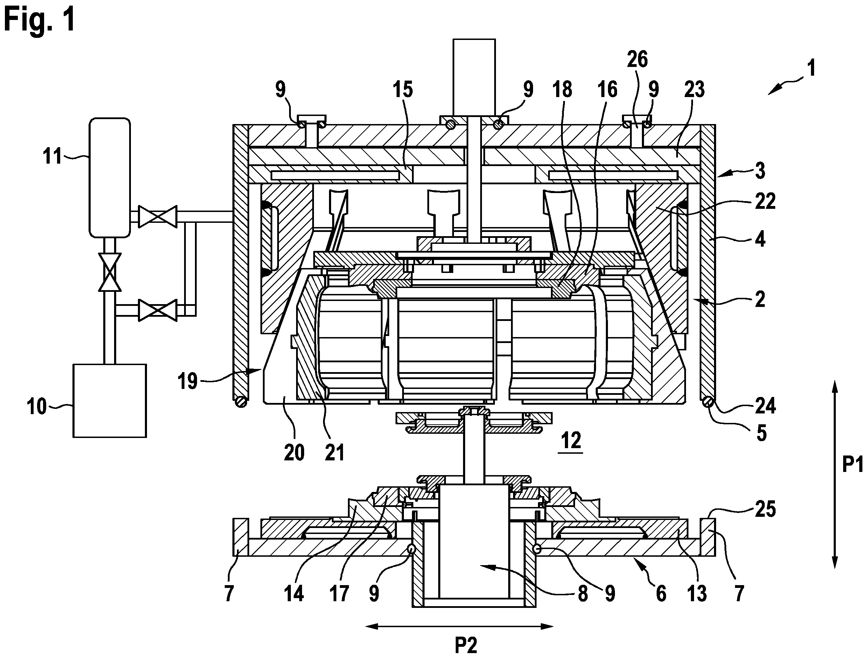

Die Fig. 1 zeigt eine erfindungsgemäße Heizpresse 1 mit einem Container 2 im geöffneten Zustand. Der Reifenrohling kann in die Heizpresse 1 eingebracht werden.

Die Heizpresse 1 umfasst ein Heizpressen-Oberteil 3, welches mit einem kreisringförmigen Hauben-Oberteil 4 in Verbindung steht und ein Heizpressen-Unterteil 6, welches mit einem kreisringförmigen Hauben-Unterteil 7 in Verbindung steht und weist die entsprechenden Mechanismen zum Positionieren des zu vulkanisierenden Reifens, zur Betätigung der Bestandteile der Vulkanisationsform, zum Einbringen der Heizmedien und zum Entfernen des fertig vulkanisierten Reifens auf. Im Hauben-Oberteil 4 ist eine Pressenplatte 23 oberhalb des Containers 2 derart angeordnet ist, dass diese Pressenplatte 23 und somit der Container 2 in axialer Richtung P1 verfahrbar ist. Der Container 2 ist während des Vulkanisationsvorganges durch die Haube 4, 7 umschlossen. Das kreisringförmige Hauben-Oberteil 4 und das kreisringförmige Hauben-Unterteil 7 weisen den gleichen Innendurchmesser und den gleichen Außendurchmesser auf und sind mit ihren Stirnflächen 24, 25 fluchtend in der Heizpresse 1 angeordnet.

Es ist ein "Mittenmechanismus" 8 angeordnet. Dieser ist -soweit notwendig - ebenfalls mit Ringdichtungen 9 bestückt, um eine Vakuumdichtheit zwischen Mittenmechanismus 8 und Heizpressen-Ober- und Unterteil 3, 6 herzustellen. An dem Mittenmechanismus 8 ist ein Heizbalg (nicht dargestellt) befestigt, welcher in den Reifenrohling (nicht dargestellt) einfügbar ist. Zudem sind Düsen (nicht dargestellt) am Mittenmechanismus 8 angeordnet, durch welche ein Heizmedium in den Heizbalg (nicht dargestellt) eingebracht werden kann.

Das Haubenoberteil 4 und das Haubenunterteil 7 sind luftdicht bzw. vakuumdicht ausgeführt und bilden in geschlossenem Zustand einen vakuumdichten Haubeninnenraum 12 aus. Um die Stirnflächen 24, 25 der beiden Hauben 4, 7 im geschlossenen Zustand vakuumdicht zu dichten, ist eine Ringdichtung 5 in der Stirnfläche 24 des Hauben-Oberteiles 4 angeordnet. Weitere Ringdichtungen 9 dichten den Mittenmechanismus 8 und die Verfahrmimik/ Aktuator 26 der Pressenplatte 23 vakuumdicht ab.

Mittels einer Pumpe 10 und einem Vakuumtank 11 ist ein Vakuum in dem Haubeninnenraum (= Innenraum der Haube) 12 erzeugbar, wobei der Vakuumtank 11 und die Pumpe 10 mit dem Innenraum 12 der Haube in Verbindung stehen und wobei der Vakuumtank 11 und die Pumpe 10 miteinander in Verbindung stehen. Durch ein Vakuum im Haubeninnenraum 12, insbesondere während des Einformens und der Vulkanisation des Reifens, ist auf übliche in der Formfläche der Vulkanisierform angeordnete Entlüftungsventile komplett verzichtet.

Der Container 2 ist ein üblicher, bereits im Stand der Technik bekannter Container 2.

Der Container 2 beinhaltet die segmentierte Vulkanisierform mit einer unteren Heizplatte 13, einer unteren Seitenwandschale 14, einer oberen Heizplatte 15, einer oberen Seitenwandschale 16, einem unteren Wulstring 17 und einem oberen Wulstring 18. Zu jenen Bestandteilen der Vulkanisationsform, die zum Öffnen und Schließen in senkrechter (= axialer) Richtung (Pfeil P1) bewegt werden, gehören der Segmentring 19 bestehend aus sieben bis neun Segmentschuhen 20 und die daran befestigten Profil-/Formsegmente 21 sowie die obere Seitenwandschale 16 mit dem oberen Wulstring 18. Die Segmentschuhe 20 werden zum Schließen und Öffnen der Vulkanisationsform radial, in Richtung des Pfeiles P2, auseinandergefahren. An der oberen Heizplatte 15 ist ein Schließring 22 angeordnet, welcher eine abgeschrägte Innenfläche aufweist, die mit abgeschrägten Außenflächen der Segmentschuhe 20 des Segmentringes 19 derart zusammen wirken, dass beim Schließen der Vulkanisationsform die Segmentschuhe 20 in radialer Richtung zum geschlossenen Segmentring 19 zusammengefahren werden. In der unteren Heizplatte 13, der oberen Heizplatte 15 und im Schließring 22 sind Heizkammern enthalten, in welche zum Vulkanisieren des Reifens zumindest ein Heizmedium, insbesondere Sattdampf (Wasserdampf), eingeleitet wird. Auf diese Weise wird der Rohreifen (nicht dargestellt) von außen über die Segmentschuhe 20, die Seitenwandschalen 14, 16 und die Wulstringe 17, 18 beheizt, sodass diese Heizung üblicherweise als Außenheizung bezeichnet wird.

Ein üblicher Heizbalg (nicht dargestellt) ist in bekannter Weise angeordnet und wird mit zumindest einem Heizmedium unter Druck befüllt, um den Rohreifen in der Form von innen her zu zentrieren, wobei der Heizbalg in eine reifengemäße Torusform gebracht wird. Nachdem der Rohreifen über den Heizbalg von innen erhitzt wird, wird diese Art der Heizung als Innenheizung bezeichnet.

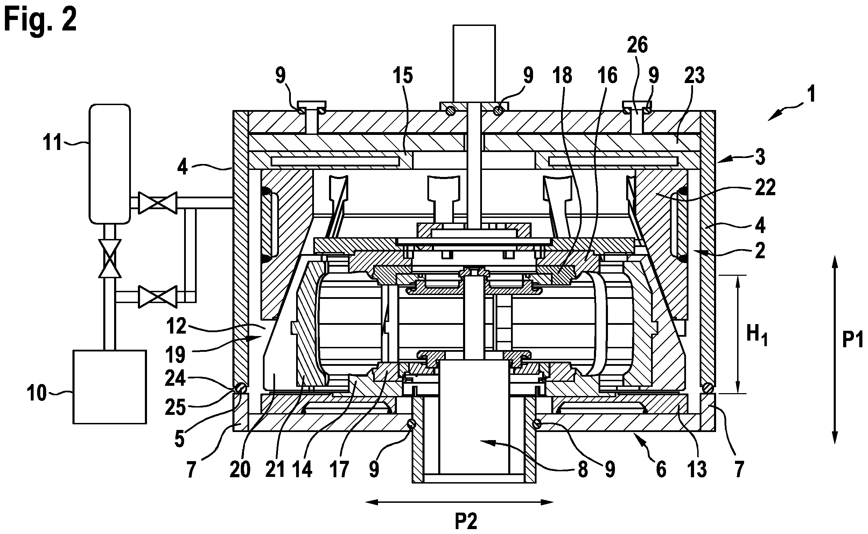

In der Fig. 2 ist die Heizpresse 1 der Fig. 1 in der Schließphase nach einem ersten Hub H₁ dargestellt.

Das Heizpressen-Oberteil 3 ist um den ersten Hub H₁ verfahren, so dass die Stirnfläche 24 des Hauben-Oberteils 4 auf der Stirnfläche 25 des Hauben-Unterteils 7 aufsitzt. Die Pressenplatte 23 im Hauben-Oberteil 3 ist noch in ihrer ursprünglichen Position und somit noch nicht verfahren. Es ist ein geschlossener vakuumdichter Haubeninnenraum 12 erhalten, während die Vulkanisierform nur zum Teil geschlossen ist. Im Fall, dass die Ringdichtung 5 ein in seinem Durchmesser veränderbarer Schlauch ist, wird diese aufgepumpt, um die Haube 4, 7 vakuumdicht abzudichten. Es wird die Verbindung zwischen Vakuumtank 11 und Haubeninnenraum 12 zur Erzeugung eines Teil-Vakuums in dem vakuumdicht geschlossenen Haubeninnenraum 12 durch Druckausgleich zwischen Vakuumtank 11 und Haubeninnenraum 12 geöffnet. Bei Erhalt des Teil-Vakuums im Haubeninnenraum 12 wird die Verbindung zwischen Vakuumtank 11 und Haube 4, 7 geschlossen, die Verbindung zwischen Haubeninnenraum 12 und Pumpe 10 geöffnet und die restlich verbliebende Luft aus dem Haubeninnenraum 12 zur Erzeugung des Vakuums abgepumpt.

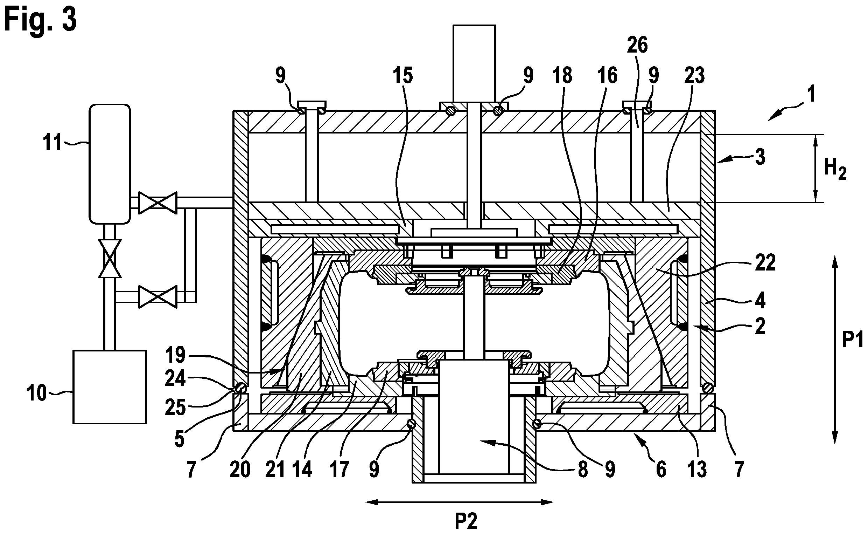

Die Fig. 3 zeigt die Heizpresse der Fig. 1 und der Fig. 2 in geschlossenem Zustand nach einem zweiten Hub H₂. Nachdem im Innenraum 12 der geschlossenen Haube 4, 7 der Fig. 2 ein Vakuum erzeugt ist, wird nun durch die Ausführung eines zweiten Hubes H₂, bei dem die Pressenplatte 23 den Container 2 in axialer Richtung P1 mittels eines Aktuators 26 verfährt, die luftleere Vulkanisierform komplett geschlossen und die Verbindung zwischen Vakuumtank 11 und Haube 4, 7 geschlossen.

Anschließend schließt man die Verbindung zwischen dem Haubeninnenraum 12 und der Pumpe 10. Es erfolgt die Vulkanisation des Rohreifen.

Bei einem PKW-Reifen dauert das Vulkanisieren desselben etwa 15 Minuten. Während dieser Zeit wird die Verbindung zwischen Pumpe 10 und Vakuumtank 11 zur Erzeugung eines Vakuums im Vakuumtank 11 geöffnet, wobei die Verbindung der Pumpe 10 zur Haube 4, 7 und die Verbindung des Vakuumtanks 11 zur Haube 4, 7 jeweils geschlossen sind. Nach erfolgter Vulkanisation des Reifens wird das Volumen des Haubeninnenraumes 12 über ein Ventil belüftet (nicht dargestellt) und die Heizpresse 1 geöffnet, um den fertig vulkanisierten Reifen aus dem die Vulkanisierform aufweisenden Container 2 zu entladen. Hierzu fährt zunächst die Pressenplatte 23 mit dem Container 2 nach oben und die Profilsegmente 21 werden gleichzeitig in radialer Richtung P2 nach außen verfahren. Anschließend fährt das Hauben-Oberteil 4 hoch und der Reifen wird freigegeben.

### Bezugszeichenliste

### (Teil der Beschreibung)

- 1: Heizpresse
- 2: Container
- 3: Heizpressen-Oberteil
- 4: Hauben-Oberteil
- 5: Ringdichtung
- 6: Heizpressen-Unterteil
- 7: Hauben-Unterteil
- 8: Mittenmechanismus
- 9: Ringdichtung
- 10: Pumpe
- 11: Vakuumtank
- 12: Innenraum der Haube = Haubeninnenraum
- 13: untere Heizplatte
- 14: untere Seitenwandschale
- 15: obere Heizplatte
- 16: obere Seitenwandschale
- 17: unterer Wulstring
- 18: oberer Wulstring
- 19: Segmentring
- 20: Segmentschuh
- 21: Profilsegment / Formsegment
- 22: Schließring
- 23: Pressenplatte
- 24: Stirnfläche des Hauben-Oberteils
- 25: Stirnfläche des Hauben-Unterteils
- 26: Aktuator
- H₁: erster Hub
- H₂: zweiter Hub
- P1: Axiale Richtung
- P2: Radiale Richtung

## Patentansprüche

1. Heizpresse (1) zum Vulkanisieren eines Fahrzeugreifens unter Vakuum
- mit einem Heizpressen-Oberteil (3) und einem Heizpressen-Unterteil (6), wobei an dem Heizpressen-Oberteil (3) ein kreisringförmiges Hauben-Oberteil (4) mit einem die Formteile (14, 16, 17, 18, 21) einer Vulkanisierform aufweisenden Container (2) angeordnet sind und wobei das Heizpressen-Oberteil (3) derart in axialer Richtung (P1) verfahrbar ist, dass das Hauben-Oberteil (3) auf das Heizpressen-Unterteil (6) zur Bildung eines geschlossenen Haubeninnenraumes (12) fahrbar ist,
- wobei das Heizpressen-Oberteil (3), das Heizpressen-Unterteil (6) und die Pressenplatte (23) mit dem Container (2) derart in Verbindung stehen, so dass beim Herunterfahren des Heizpressen-Oberteils (3) und der Pressenplatte (23) über einen in axialer Richtung (P1) erfolgenden Gesamthub, bei dem das offene Ende des Hauben-Oberteils (4) auf das Heizpressen-Unterteil (6) fährt, die Formteile (14, 16, 17, 18, 21) der Vulkanisierform in radialer Richtung (P2) schließbar sind,
- wobei zumindest eine vakuumdichte Dichtung (5) zumindest in der Stirnfläche (24) eines Hauben-Teils (4) angeordnet ist,
- wobei bei einem ersten Hub (H₁) das Hauben-Oberteil (3) derart verfahrbar ist, dass dieses auf dem Heizpressen-Unterteil (6) aufsitzt und der Haubeninnenraum (12) durch die Dichtung(en) (5, 9) vakuumdicht schließbar ist, während die Vulkanisierform jedoch noch luftdurchlässig geöffnet ist und
- wobei eine Pumpe (10) und ein Vakuumtank (11) angeordnet sind, mittels derer im Haubeninnenraum (12) nach dem ersten Hub (H₁) ein Vakuum erzeugbar ist, wobei der Vakuumtank (11) und die Pumpe (10) mit dem Haubeninnenraum (12) in Verbindung stehen und wobei der Vakuumtank (11) und die Pumpe (10) miteinander in Verbindung stehen und
- wobei bei einem zweiten Hub (H₂) die Pressenplatte (23) derart verfahrbar ist, dass die Vulkanisierform unter Vakuumbedingungen im Haubeninnenraum (12) vollständig schließbar ist,
**dadurch gekennzeichnet,**
- **dass** im Hauben-Oberteil (4) eine Pressenplatte (23) oberhalb des Containers (2) derart angeordnet ist, dass diese Pressenplatte (23) und somit der Container (2) in axialer Richtung (P1) verfahrbar ist.

2. Heizpresse (1) nach Anspruch 1, **dadurch gekennzeichnet, dass** ein hydraulischer, pneumatischer oder elektrischer Aktuator (26) angeordnet ist, durch den die Pressenplatte in axialer Richtung (P1) verfahrbar ist.

3. Heizpresse (1) nach Anspruch 1 oder 2, **dadurch gekennzeichnet, dass** an dem Heizpressen-Unterteil (6) ein Hauben-Unterteil (7) in Form eines Kreisringes angeordnet ist, wobei der Kreisring des Hauben-Oberteiles (3) und der Kreisring des Hauben-Unterteiles (7) den gleichen Innendurchmesser und den gleichen Außendurchmesser aufweisen und miteinander fluchtend in der Heizpresse (1) angeordnet sind.

4. Heizpresse (1) nach einem oder mehreren der vorangehenden Ansprüche, **dadurch gekennzeichnet, dass** die Dichtung eine Ringdichtung (5, 9) ist.

5. Heizpresse (1) nach Anspruch 4, **dadurch gekennzeichnet, dass** die Ringdichtung (5, 9) in einer kreisringförmigen Nut angeordnet ist, wobei der Durchmesser der Ringdichtung (5, 9) geringfügig größer als die Tiefe der Nut ist.

6. Heizpresse (1) nach Anspruch 4 oder 5, **dadurch gekennzeichnet, dass** die Ringdichtung (5, 9) aus Vollmaterial bestehen.

7. Heizpresse (1) nach Anspruch 4 oder 5, **dadurch gekennzeichnet, dass** die Ringdichtung (5, 9) ein in ihrem Durchmesser veränderbarer Schlauch ist.

8. Heizpresse (1) nach einem oder mehreren der Ansprüche 4 bis 7, **dadurch gekennzeichnet, dass** die Ringdichtung (5, 9) eine differentiell gepumpte Doppelringdichtung ist.

9. Heizpresse (1) nach einem oder mehreren der vorangehenden Ansprüche, **dadurch gekennzeichnet, dass** der Vakuumtank (11) ein Volumen aufweist, welche etwa 5 bis 10 mal größer als das Volumen der geschlossenen Haube(n) (4, 7) ist.

10. Verfahren zur Vulkanisation eines Fahrzeugluftreifens unter Vakuum in einer Heizpresse (1) nach einem oder mehreren der Ansprüche 1 bis 9, wobei man folgende Schritte nacheinander ausführt:
a) Beladen der geöffneten Heizpresse (1) durch Einlegen des zu vulkanisierenden Rohreifens in den Container (2)
b) Verfahren des Heizpressen-Oberteils (3) um den ersten Hub (H₁) in axialer Richtung (P1) in Richtung Heizpressen-Unterteil (6), bis die Stirnfläche (24) des Hauben-Oberteils (4) auf dem Heizpressen-Unterteil (6) aufsetzt, um einen vakuumdicht geschlossenen Haubeninnenraum (12) zu erhalten, während die Vulkanisierform nur zum Teil geschlossen ist
c) nur im Fall, dass die Ringdichtung (5, 9) ein in ihrem Durchmesser veränderbarer Schlauch ist: Aufpumpen der kreisringförmigen Schlauchdichtung, um den Haubeninnenraum (12) vakuumdicht abzudichten
d) Öffnen der Verbindung zwischen Vakuumtank (11) und Haubeninnenraum (12) zur Erzeugung eines Teil-Vakuums in dem vakuumdicht geschlossenen Haubeninnenraum (12) durch Druckausgleich zwischen Vakuumtank (11) und Haubeninnenraum (12)
e) bei Erhalt des Teil-Vakuums im Haubeninnenraum (12): Schließen der Verbindung zwischen Vakuumtank (11) und Haubeninnenraum (12), Öffnen der Verbindung zwischen Haubeninnenraum (12) und Pumpe (10) und Abpumpen der restlich verbliebenden Luft aus dem Haubeninnenraum (12) zur Erzeugung des Vakuums
f) Derartiges Verfahren des Containers (2), dass die Vulkanisierform vollständig geschlossen wird und anschließendes Schließen der Verbindung zwischen dem Haubeninnenraum (12) und der Pumpe (10)
g) Vulkanisation des Rohreifen und Öffnen der Verbindung zwischen Pumpe (10) und Vakuumtank (11) und Erzeugung eines Vakuums im Vakuumtank (11), wobei die Verbindung der Pumpe (10) zu dem Haubeninnenraum (12) und die Verbindung des Vakuumtanks (11) zum Haubeninnenraum (12) jeweils geschlossen sind
h) Öffnen der Heizpresse (1) und Entladen des fertig vulkanisierten Reifens und zur Vulkanisierung jedes weiteren Reifens Wiederholung der Schritte a) - h),
**dadurch gekennzeichnet,**
**dass** für Schritt f) die Pressenplatte (23) im Heizpressen-Oberteil (3) um den zweiten Hub (H₂) verfahren wird.

11. Verfahren zur Vulkanisation eines Fahrzeugluftreifens nach Anspruch 10, **dadurch gekennzeichnet, dass** man zur Erleichterung von Schritt h) vorher ein weiteres in den Hauben (4, 7) angeordnetes Ventil zum Brechen des Vakuums öffnet und anschließend wieder schließt.

## Claims

1. Heating press (1) for vulcanizing a vehicle tyre under a vacuum,
- having a heating press upper part (3) and a heating press lower part (6), wherein a circular-ring-shaped hood upper part (4) with a container (2) having the mould parts (14, 16, 17, 18, 21) of a vulcanizing mould is arranged on the heating press upper part (3), and wherein the heating press upper part (3) can be moved in an axial direction (P1) in such a way that the hood upper part (3) can be moved onto the heating press lower part (6) to form a closed hood interior space (12),
- wherein the heating press upper part (3), the heating press lower part (6) and the press plate (23) are connected to the container (2) such that, when the heating press upper part (3) and the press plate (23) are being lowered through a total stroke that takes place in an axial direction (P1), in the course of which total stroke the open end of the hood upper part (4) moves onto the heating press lower part (6), the mould parts (14, 16, 17, 18, 21) of the vulcanizing mould can be closed in a radial direction (P2),
- wherein at least one vacuum-tight seal (5) is arranged at least in the end face (24) of a hood part (4),
- wherein, in the course of a first stroke (H₁), the hood upper part (3) can be moved in such a way that it rests on the heating press lower part (6) and the hood interior space (12) can be closed in a vacuum-tight manner by the seal(s) (5, 9) although the vulcanizing mould is still open in an air-permeable manner, and
- wherein a pump (10) and a vacuum tank (11), by means of which a vacuum can be generated in the hood interior space (12) after the first stroke (H₁), are provided, wherein the vacuum tank (11) and the pump (10) are connected to the hood interior space (12), and wherein the vacuum tank (11) and the pump (10) are connected to one another, and
- wherein, in the course of a second stroke (H₂), the press plate (23) can be moved in such a way that the vulcanizing mould can be completely closed under vacuum conditions in the hood interior space (12),
**characterized in that**
- a press plate (23) is arranged above the container (2) in the hood upper part (4) such that this press plate (23) and thus the container (2) can be moved in the axial direction (P1).

2. Heating press (1) according to Claim 1, **characterized in that** a hydraulic, pneumatic or electric actuator (26), which can move the press plate in the axial direction (P1), is provided.

3. Heating press (1) according to Claim 1 or 2, **characterized in that** a hood lower part (7) in the form of a circular ring is arranged on the heating press lower part (6), wherein the circular ring of the hood upper part (3) and the circular ring of the hood lower part (7) have the same inside diameter and the same outside diameter and are arranged in line with one another in the heating press (1).

4. Heating press (1) according to one or more of the preceding claims, **characterized in that** the seal is a ring seal (5, 9).

5. Heating press (1) according to Claim 4, **characterized in that** the ring seal (5, 9) is arranged in a circular-ring-shaped groove, wherein the diameter of the ring seal (5, 9) is slightly greater than the depth of the groove.

6. Heating press (1) according to Claim 4 or 5, **characterized in that** the ring seal (5, 9) consists of solid material.

7. Heating press (1) according to Claim 4 or 5, **characterized in that** the ring seal (5, 9) is a hose of variable diameter.

8. Heating press (1) according to one or more of Claims 4 to 7, **characterized in that** the ring seal (5, 9) is a differentially inflated double ring seal.

9. Heating press (1) according to one or more of the preceding claims, **characterized in that** the vacuum tank (11) has a volume that is approximately 5 to 10 times greater than the volume of the closed hood(s) (4, 7).

10. Method for vulcanizing a pneumatic vehicle tyre under a vacuum in a heating press (1) according to one or more of Claims 1 to 9, wherein the following steps are performed in succession:
a) loading the opened heating press (1) by placing the green tyre for vulcanization into the container (2),
b) moving the heating press upper part (3) through the first stroke (H₁) in the axial direction (P1) toward the heating press lower part (6), until the end face (24) of the hood upper part (4) rests on the heating press lower part (6), in order to obtain a hood interior space (12) which is closed in a vacuum-tight manner, while the vulcanizing mould is only closed to some extent,
c) only if the ring seal (5, 9) is a hose of variable diameter: inflating the circular-ring-shaped hose seal in order to seal off the hood interior space (12) in a vacuum-tight manner,
d) opening the connection between the vacuum tank (11) and the hood interior space (12) in order to generate a partial vacuum, by way of pressure equalization between the vacuum tank (11) and the hood interior space (12), in the hood interior space (12) that has been closed in a vacuum-tight manner,
e) when the partial vacuum is obtained in the hood interior space (12): closing the connection between the vacuum tank (11) and the hood interior space (12), opening the connection between the hood interior space (12) and the pump (10), and pumping the remaining air out of the hood interior space (12) in order to generate the vacuum,
f) moving the container (2) such that the vulcanizing mould is completely closed and subsequently closing the connection between the hood interior space (12) and the pump (10),
g) vulcanizing the green tyre and opening the connection between the pump (10) and the vacuum tank (11) and generating a vacuum in the vacuum tank (11), wherein the connection of the pump (10) to the hood interior space (12) and the connection of the vacuum tank (11) to the hood interior space (12) are each closed,
h) opening the heating press (1) and removing the fully vulcanized tyre and repeating steps a) - h) in order to vulcanize each further tyre,
**characterized in that**
for step f), the press plate (23) in the heating press upper part (3) is moved through the second stroke (H₂).

11. Method for vulcanizing a pneumatic vehicle tyre according to Claim 10, **characterized in that**, to facilitate step h), this is preceded by opening a further valve arranged in the hoods (4, 7) in order to deplete the vacuum and subsequently closing it again.

## Revendications

1. Presse chauffante (1) pour la vulcanisation sous vide d'un pneu de véhicule
- avec une partie supérieure de presse chauffante (3) et une partie inférieure de presse chauffante (6), une partie supérieure de capot (4) en forme d'anneau circulaire avec un contenant (2) présentant les parties de moule (14, 16, 17, 18, 21) d'un moule de vulcanisation étant agencés sur la partie supérieure de presse chauffante (3), et la partie supérieure de presse chauffante (3) pouvant être déplacée dans la direction axiale (P1) de telle sorte que la partie supérieure de capot (3) peut être déplacée sur la partie inférieure de presse chauffante (6) pour former un espace intérieur de capot (12) fermé,
- la partie supérieure de presse chauffante (3), la partie inférieure de presse chauffante (6) et la plaque de presse (23) étant en liaison avec le contenant (2) de telle sorte que, lors de la descente de la partie supérieure de presse chauffante (3) et de la plaque de presse (23) sur une course totale dans la direction axiale (P1), au cours de laquelle l'extrémité ouverte de la partie supérieure de capot (4) se déplace sur la partie inférieure de presse chauffante (6), les parties de moule (14, 16, 17, 18, 21) du moule de vulcanisation peuvent être fermées dans la direction radiale (P2),
- au moins un joint d'étanchéité étanche au vide (5) étant agencé au moins dans la surface frontale (24) d'une partie de capot (4),
- lors d'une première course (H₁), la partie supérieure de capot (3) pouvant être déplacée de telle sorte que celle-ci repose sur la partie inférieure de presse chauffante (6) et l'espace intérieur de capot (12) pouvant être fermé de manière étanche au vide par le ou les joints d'étanchéité (5, 9), tandis que le moule de vulcanisation est cependant encore ouvert de manière à laisser passer l'air, et
- une pompe (10) et un réservoir à vide (11) étant agencés, au moyen desquels un vide peut être produit dans l'espace intérieur de capot (12) après la première course (H₁), le réservoir à vide (11) et la pompe (10) étant en liaison avec l'espace intérieur de capot (12) et le réservoir à vide (11) et la pompe (10) étant en liaison entre eux, et
- lors d'une deuxième course (H₂), la plaque de presse (23) pouvant être déplacée de telle sorte que le moule de vulcanisation peut être complètement fermé dans des conditions de vide dans l'espace intérieur de capot (12), **caractérisée**
- **en ce qu'**une plaque de presse (23) est agencée dans la partie supérieure de capot (4) au-dessus du contenant (2) de telle sorte que cette plaque de presse (23) et donc le contenant (2) peuvent être déplacés dans la direction axiale (P1).

2. Presse chauffante (1) selon la revendication 1, **caractérisée en ce qu'**un actionneur hydraulique, pneumatique ou électrique (26) est agencé, grâce auquel la plaque de presse peut être déplacée dans la direction axiale (P1).

3. Presse chauffante (1) selon la revendication 1 ou 2, **caractérisée en ce qu'**une partie inférieure de capot (7) sous la forme d'un anneau circulaire est agencée sur la partie inférieure de presse chauffante (6), l'anneau circulaire de la partie supérieure de capot (3) et l'anneau circulaire de la partie inférieure de capot (7) présentant le même diamètre intérieur et le même diamètre extérieur et étant agencés en alignement l'un avec l'autre dans la presse chauffante (1).

4. Presse chauffante (1) selon une ou plusieurs des revendications précédentes, **caractérisée en ce que** le joint d'étanchéité est un joint d'étanchéité annulaire (5, 9).

5. Presse chauffante (1) selon la revendication 4, **caractérisée en ce que** le joint d'étanchéité annulaire (5, 9) est agencé dans une rainure en forme d'anneau circulaire, le diamètre du joint d'étanchéité annulaire (5, 9) étant légèrement supérieur à la profondeur de la rainure.

6. Presse chauffante (1) selon la revendication 4 ou 5, **caractérisée en ce que** le joint d'étanchéité annulaire (5, 9) est constitué de matériau plein.

7. Presse chauffante (1) selon la revendication 4 ou 5, **caractérisée en ce que** le joint d'étanchéité annulaire (5, 9) est un tuyau dont le diamètre peut être modifié.

8. Presse chauffante (1) selon une ou plusieurs des revendications 4 à 7, **caractérisée en ce que** le joint d'étanchéité annulaire (5, 9) est un joint d'étanchéité annulaire double à pompage différentiel.

9. Presse chauffante (1) selon une ou plusieurs des revendications précédentes, **caractérisée en ce que** le réservoir à vide (11) présente un volume qui est environ 5 à 10 fois plus grand que le volume du ou des capots fermés (4, 7).

10. Procédé de vulcanisation sous vide d'un pneumatique de véhicule dans une presse chauffante (1) selon une ou plusieurs des revendications 1 à 9, les étapes suivantes étant réalisées successivement :
a) le chargement de la presse chauffante ouverte (1) en plaçant le pneu cru à vulcaniser dans le contenant (2),
b) le déplacement de la partie supérieure de presse chauffante (3) de la première course (H₁) dans la direction axiale (P1) en direction de la partie inférieure de presse chauffante (6) jusqu'à ce que la surface frontale (24) de la partie supérieure de capot (4) repose sur la partie inférieure de presse chauffante (6) afin d'obtenir un espace intérieur de capot (12) fermé de manière étanche au vide, tandis que le moule de vulcanisation n'est que partiellement fermé,
c) uniquement dans le cas où le joint d'étanchéité annulaire (5, 9) est un tuyau dont le diamètre peut être modifié : le gonflage du joint d'étanchéité en tuyau en forme d'anneau circulaire pour rendre l'espace intérieur de capot (12) étanche au vide,
d) l'ouverture de la liaison entre le réservoir à vide (11) et l'espace intérieur de capot (12) pour produire un vide partiel dans l'espace intérieur de capot (12) fermé de manière étanche au vide, en équilibrant la pression entre le réservoir à vide (11) et l'espace intérieur de capot (12),
e) lors de l'obtention du vide partiel dans l'espace intérieur de capot (12) : la fermeture de la liaison entre le réservoir à vide (11) et l'espace intérieur de capot (12), l'ouverture de la liaison entre l'espace intérieur de capot (12) et la pompe (10) et le pompage de l'air résiduel restant dans l'espace intérieur de capot (12) pour produire le vide,
f) le déplacement du contenant (2) de manière à fermer complètement le moule de vulcanisation et ensuite la fermeture de la liaison entre l'espace intérieur de capot (12) et la pompe (10),
g) la vulcanisation du pneu cru et l'ouverture de la liaison entre la pompe (10) et le réservoir à vide (11) et la production d'un vide dans le réservoir à vide (11), la liaison de la pompe (10) à l'espace intérieur de capot (12) et la liaison du réservoir à vide (11) à l'espace intérieur de capot (12) étant respectivement fermées,
h) l'ouverture de la presse chauffante (1) et le déchargement du pneu vulcanisé terminé et, pour vulcaniser chaque autre pneu, la répétition des étapes a) à h),
**caractérisé**
**en ce que**, pour l'étape f), la plaque de presse (23) est déplacée de la deuxième course (H₂) dans la partie supérieure de presse chauffante (3).

11. Procédé de vulcanisation d'un pneumatique de véhicule selon la revendication 10, **caractérisé en ce que**, pour faciliter l'étape h), une autre soupape agencée dans les capots (4, 7) est ouverte au préalable pour casser le vide, puis refermée.
